Europäisches Patentamt

European Patent Office

Office européen des brevets

(11) Veröffentlichungsnummer: **0 252 201**
**B1**

(12) **EUROPÄISCHE PATENTSCHRIFT**

(45) Veröffentlichungstag der Patentschrift:
**26.07.89**

(51) Int. Cl.⁴: **G05B 19/405**

(21) Anmeldenummer: **86890164.6**

(22) Anmeldetag: **05.06.86**

(54) Verfahren und Vorrichtung zum Erkennen von Schneiden- und Messerplättchenschäden an Fräsern.

(43) Veröffentlichungstag der Anmeldung:
**13.01.88 Patentblatt 88/2**

(45) Bekanntmachung des Hinweises auf die Patenterteilung:
**26.07.89 Patentblatt 89/30**

(84) Benannte Vertragsstaaten:
**AT DE FR GB IT**

(56) Entgegenhaltungen:
**EP-A- 0 123 463**
**EP-A- 0 127 751**
**US-A- 4 207 567**
**US-A- 4 326 257**

(73) Patentinhaber: **GFM Gesellschaft für Fertigungstechnik und Maschinenbau Gesellschaft m.b.H., Ennserstrasse 14, A-4403 Steyr(AT)**

(72) Erfinder: **Kralowetz, Robert, Dipl.-Phys., Raimundstrasse 1, A-4400 Steyr(AT)**

(74) Vertreter: **Hübscher, Gerhard, Dipl.-Ing., Patentanwälte Dipl.-Ing. Gerhard Hübscher Dipl.-Ing. Helmut Hübscher Dipl.-Ing. Heiner Hübscher Spittelwiese 7, A-4020 Linz(AT)**

**Beschreibung**

Die Erfindung bezieht sich auf ein Verfahren gemäß der Patentschrift US-A 4 326 257 zum Erkennen von Schneiden- und Messerplättchenschäden an Fräsern, nach dem eine durch den Schneidvorgang beeinflußte Kenngröße über Fühler od. dgl. Meßwertaufnehmer erfaßt und während des Fräsens überwacht wird, wobei sprunghafte Änderungen der von den Fühlern od. dgl. gelieferten Meßwerte als Anzeichen für das Auftreten eines Schadens genutzt werden und zum Auslösen einer Störmeldung dienen, sowie auf eine Vorrichtung zur Durchführung dieses Verfahrens.

Um bei Fräsern mit ihrer Mehrzahl von Schneiden oder Messerplättchen das Ausbrechen einzelner Schneiden oder den Bruch einzelner Messerplättchen rechtzeitig erkennen und dadurch verhindern zu können, daß eine durch den Ausfall einzelner Schneiden oder Plättchen bedingte Mehrbelastung der gebrochenen Schneiden oder Plättchen nachfolgenden Schneiden oder Plättchen weitere Schneiden- oder Plättchenschäden oder gar Be arbeitungsfehler am Werkstück entstehen, werden vom Schneidvorgang abhängige Kenngrößen, wie Belastung oder Leistung, während des Fräsens überwacht und deren Istwerte laufend mit einem den ordnungsgemäßen Schneidvorgang widerspiegelnden Sollwertbereich verglichen. Da das plötzliche Auftreten eines Plättchenbruches od. dgl. zu Belastungsspitzen führt und daher auch Unregelmäßigkeiten im Istwert der Kenngröße verursacht, läßt sich durch eine geeignete Überwachungseinrichtung diese auffallende Änderung der Kenngrößenmeßwerte, soferne sie nicht durch Änderungen in den Arbeitsbedingungen vorhersehbar und dadurch einkalkulierbar sind, zur Schadenserkennung nutzen und zum Auslösen einer beispielsweise den Schneidvorgang unterbrechenden Störmeldung od. dgl. heranziehen. Wegen des rotierenden Fräsers, des wechselnden Schneideneingriffes in das Werkstück, der auf die gleichzeitig eingreifenden Schneiden verteilten Belastung u. dgl. bereitet bisher allerdings das Erfassen der durch den Bruch einzelner Plättchen oder Schneiden hervorgerufenen Kenngrößenunregelmäßigkeiten beträchtliche Schwierigkeiten, da die direkte Messung an der Messerkopfbefestigung durch die Drehbewegung des Messerkopfträgers stark behindert wird, die Messung der Reaktionskraft auf die Trägerlagerung bei wechselnder Schnittkraftrichtung zu aufwendig ist und auch die Messung der Abstützkräfte in den Vorschubachsen wegen der großen Masse des Frässchlittens zu ungenau wird. Ähnliche Verhältnisse ergeben sich bei der Messung der Fräsleistung, die durch die Belastungsaufteilung auf mehrere Schneiden für die Brucherkennung zu träge ist.

Der Erfindung liegt daher die Aufgabe zugrunde, diese Mängel zu beseitigen und ein Verfahren der eingangs geschilderten Art anzugeben, das eine einfache und doch genaue Schadenserkennung erlaubt, Außerdem soll eine zweckmäßige Vorrichtung zur Durchführung dieses Verfahrens geschaffen werden.

Die Erfindung löst diese Aufgabe dadurch, daß die Kenngröße aus dem Bewegungs- oder Belastungsverhalten der Werkstückabstützung abgeleitet wird und die zugehörigen Meßwerte von der Werkstückabstützung abgenommen werden. Da die das Werkstück aufnehmenden Teile der Werkstückabstützung relativ geringe Masse besitzen und einer Messung gut zugänglich sind, können hier an der Werkstückabstützung die durch das Auftreten von Schneiden- oder Messerplättchenschäden verursachten Unregelmäßigkeiten gegenüber dem normalen Kraft- und Belastungsverlauf, die über das Werkstück direkt und mit annähernd ungemilderter Intensität auf die Abstützungsteile einwirken, optimal erfaßt werden. Es kommt zu keinem größeren Amboßeffekt der Abstützung und alle Reaktionen des Werkstückes auf einen Schneiden- oder Messerplättchenbruch übertragen sich praktisch ungehindert auf die Abstützung, so daß als Kenngröße Beschleunigungen, Schwingungen hinsichtlich Frequenzen und Amplituden, Stützkräfte und Spannungen usw. allein oder in Kombination verwendet und ohne Schwierigkeiten von der Abstützung abgenommen werden können.

Gibt es eine Fräsmaschine, deren Werkstückabstützung aus zwei Aufnahmestöcken und vorzugsweise wenigstens einer Lünette besteht, kann erfindungsgemäß das Verfahren in vorteilhafter Weise durch zumindest einen Fühler od. dgl. zur Beschleunigungs- oder Schwingungs- oder Frequenz- oder Kraft- oder Spannungsmessung durchgeführt werden, der am Spannfutter der Aufnahmestöcke oder vorzugsweise an einer Stützbacke der Lünette angesetzt ist. Hier ist der Fühler nur mit geringem Abstand vom Werkstück angeordnet und kann auch geringfügige Änderungen der Kenngrößenwerte registrieren, wobei durch das feste Spannen des Werkstückes mittels der Spannbacken und den dadurch gegebenen engen Kontakt zwischen Werkstück und Abstützung für eine sichere einwandfreie Übertragung der Werkstückreaktionen auf die Werkstückabstützung gesorgt ist. Umfaßt die Werkstückabstützung auch eine Lünette, wird der Fühler auf der Stützbacke od.dgl. der Lünette angeordnet sein, da die Lünetten in der Nähe der jeweiligen Frässtelle eingesetzt werden und dadurch auch der Fühler im unmittelbaren Nahbereich des Schneidvorganges die Kenngröße in größter Deutlichkeit erfassen kann.

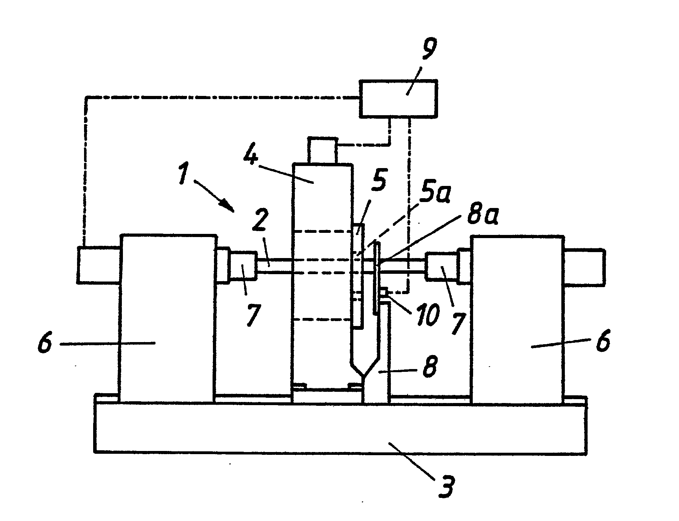

In der Zeichnung ist der Erfindungsgegenstand rein schematisch an Hand einer Fräsmaschine mit der erfindungsgemäßen Vorrichtung veranschaulicht.

Eine Fräsmaschine 1 zur Fräsbearbeitung von wellenförmigen Werkstücken 2 weist eine auf einem Maschinenbett 3 längsverschiebbare Fräseinheit 4 auf, die mit einem Fräsrad 5 bestückt ist. Zur Werkstückabstützung sind zwei Aufnahmestöcke 6 auf dem Maschinenbett 3 aufgesetzt, deren Spannfutter 7 das Werkstück 2 endseitig spannen, und eine zusätzliche Lünette 8 dient zur Abstützung des Werkstückes 2 im Bereich des Fräsrades 5.

Um einen Bruch einzelner Messerplättchen 5a des Fräsrades 5 erkennen zu können, gibt es eine Überwachungseinrichtung 9, die eine vom Schneidvorgang beeinflußte Kenngröße über einen Fühler 10 erfaßt und während des Fräsens überwacht. Der Fühler 10 ist an der Stützbacke 8a der Lünette 8 angeordnet und eignet sich zur Messung von Schwingungen, doch können auch Fühler zur Beschleunigungs-,Kraft-,Spannungsmessung od. dgl. vorgesehen sein. Durch diesen Fühler 10 wird das durch den Fräsvorgang beeinflußte Verhalten der Werkstückabstützung überwacht und die Ergebnisse beispielsweise der Schwingungsmessung laufend der Überwachungseinrich tung 9 eingegeben. Ein plötzlicher Bruch eines Messerplättchens 5a des Fräsrades 5 führt zu einer sprunghaften Änderung der Meßwerte und auf Grund dieser als Anzeichen für das Auftreten eines Messerplättchenbruches dienenden Unregelmäßigkeiten wird über die Überwachungseinrichtung 9 der Fräsvorgang unterbrochen, indem beispielsweise das Fräsrad außer Eingriff gebracht und die Antriebsmotoren stillgesetzt werden.

Durch die Wahl einer vom Bewegungs- oder Belastungsverhalten der Werkstückabstützung abgeleiteten Kenngröße und der dadurch gegebenen Möglichkeit, den Fühler 10 an der Stützbacke 8a der Lünette 8 oder auch an einem Spannfutter 7 anzusetzen, kann ein reaktionsschnelles, feinfühliges Erkennen eines Messerplättchenbruches erreicht werden, da die Reaktion des Werkstückes auf einen Messerplättchenbruch direkt und ohne Überwindung dämpfender Lagerungsbedingungen oder träger Massen erfaßt und überwacht werden kann, wozu das Messen verschiedenster Kenngrößen und das Auswerten in beliebig geeigneten Schaltanordnungen möglich ist.

## Patentansprüche

1. Verfahren zum Erkennen von Schneiden- und Messerplättchenschäden an Fräsern, nach dem eine durch den Schneidvorgang beeinflußte Kenngröße über Fühler oder Meßwertaufnehmer erfaßt und während des Fräsens überwacht wird, wobei sprunghafte Änderungen der von den Fühlern gelieferten Meßwerte als Anzeichen für das Auftreten eines Schadens genutzt werden und zum Auslösen einer Störmeldung dienen, dadurch gekennzeichnet, daß die Kenngröße aus dem Bewegungs- oder Belastungsverhalten der Werkstückabstützung abgeleitet wird und die zugehörigen Meßwerte von der Werkstückabstützung abgenommen werden.

2. Vorrichtung zum Durchführen des Verfahrens nach Anspruch 1, mit einer Fräsmaschine (1), deren Werkstückabstützung aus zwei Aufnahmestöcken (6) und vorzugsweise wenigstens einer Lünette (8) besteht, sowie einer Überwachungseinrichtung (9), gekennzeichnet durch zumindest einen Fühler (10) zur Beschleunigungs- oder Schwingungs- oder Frequenz- oder Kraft- oder Spannungsmessung, der an einem Spannfutter (7) der Aufnahmestöcke (6) oder vorzugsweise an einer Stützbacke (8a) der Lünette (8) angesetzt ist.

## Claims

1. A method of detecting a damage in cutting edges or inserted cutting teeth of milling cutters, wherein a viariable which is influenced by the cutting operation is detected and monitored by means of a sensor or pickup, wherein sudden changes of the measured values detected by the sensors are utilized as an indication that a damage has occured and result in an indication of a defect, characterized in that the variable is derived from the motional or load behaviour of the means for supporting the workpiece, and the corresponding measured values are obtained from the means for supporting the workpiece.

2. An apparatus for carrying out the method according to claim 1, comprising a milling machen (1) in which the means for supporting the workpiece comprise two supports (6) and preferably at least one backrest (8), and which also comprise monitoring means (9), characterized by at least one sensor (10) for measuring an acceleration or vibration or frequency or force or stress, which sensor is attached to a chuck (7) of the support (6) or preferably of a supporting jaw (8a) of the backrest (8).

## Revendications

1. Procédé pour détecter des détériorations des arêtes tranchantes et plaquettes rapportées des fraises, dans lequel un paramètre, influencé par l'opération de coupe, est capté à l'aide de palpeurs ou de capteurs et surveillé pendant le fraisage, les variations brusques des valeurs mesurées fournies par les palpeurs ou équivalents étant utilisées comme indication de l'apparition d'une détérioration et servant à déclencher un avertissement de défaillance, caractérisé par le fait que le paramètre dérive du comportement de déplacement ou de charge de l'organe d'appui de la pièce et que les valeurs mesurées correspondantes sont prises sur l'organe d'appui de la pièce.

2. Dispositif pour la mise en œuvre du procédé selon la revendication 1, comprenant une fraiseuse (1) dont l'organe d'appui de la pièce est composé de deux poupées porte-pièce (6) et, de préférence, d'au moins une lunette (8), ainsi qu'un dispositif de surveillance (9), caractérisé par le fait qu'il comporte au moins un palpeur (10) pour la mesure de l'accélération, de la vibration, de la fréquence ou de la force ou de la tension, qui est monté sur un mandrin (7) des poupées porte-pièce (6), ou de préférence sur une mâchoire d'appui (8a) de la lunette (8).